# EUROPEAN PATENT APPLICATION

(11) **EP 2 631 823 A1**
(43) Date of publication of application: **28.08.2013**
(21) Application number: 13153221.0
(22) Date of filing: 30.01.2013
(51) Int. Cl.: G06F 17/30

(54) **Method and apparatus for editing content view in a mobile device**

(30) Priority: 24.02.2012 KR 20120018778
(71) Applicant: Samsung Electronics Co., Ltd, Gyeonggi-do 443-742 (KR)
(72) Inventor: Heo, Seunghyuck, 443-742 Gyeonggi-do (KR); Joo, Jongsung, 443-742 Gyeonggi-do (KR)
(74) Representative: Gover, Richard Paul

(57) **Abstract**

A method and apparatus that easily locate desired content at a desired point in a content view is achieved by detecting a touch event for adding or changing content in the content view, displaying a candidate group having contents capable of being located at a touch point of the detected touch event, displaying, at the touch point of the detected touch event, content selected from the contents of the candidate group, and displaying the content view in which the selected content is located at the touch point.

## Description

### BACKGROUND OF THE INVENTION

### Field of the Invention

The present invention relates generally to a method and apparatus for editing a displayed content through manipulations on a touch screen in a mobile device.

### Description of the Related Art

With a remarkable growth in mobile technologies, a variety of mobile devices are available and increasingly popularized in these days. A mobile device can typically display a content view, which refers to a screen on which a number of contents are arranged and displayed for viewing and selection. These contents may include text, images, documents, icons, thumbnails, application executing screens, and the like.

Mobile devices implemented with a touch screen can add new contents to a content view or change any existing contents in response to user's touch gesture.

Unfortunately, a conventional method and apparatus for editing a content edit have a drawback of causing inconvenience in editing when a user desires to add or change content. In the conventional method, a mobile device displays a candidate group at any region which forces a user to manually move the desired contents from all over the screen or even from next screen.

### BRIEF SUMMARY OF THE INVENTION

Accordingly, the present invention is to address the above-mentioned problems and/or disadvantages and to offer at least the advantages described below.

One aspect of the present invention is to provide a method and apparatus for easily editing a content view.

Another aspect of the present invention is to provide a method and apparatus for easily locating desired content at a desired point in a content view.

According to one aspect of the present invention, a method for editing a content view in a mobile device having a touch screen includes: detecting a touch event for adding or changing content in the content view; displaying a candidate group having contents capable of being located near a touch point of the detected touch event; displaying, at the touch point of the detected touch event, content selected from the contents of the candidate group; and displaying the content view in which the selected content is placed at the touch point.

According to another aspect of the present invention, an apparatus for editing a content view in a mobile device includes: a display unit configured to display the content view; a touch screen disposed on the front of the display unit and configured to create a touch event in response to a touch gesture on the content view; a control unit configured to detect a specific touch event for adding or changing content in the content view from the touch screen, to control the display unit to display a candidate group having contents capable of being located near a touch point of the detected touch event, to control the display unit to display, at the touch point of the detected touch event, content selected from the contents of the candidate group, and to control the display unit to display the content view in which the selected content is placed at the touch point.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

FIG. 1 is a block diagram illustrating the configuration of a mobile device in accordance with an embodiment of the present invention.
FIG. 2 is a block diagram illustrating a detailed configuration of a control unit shown in FIG. 1.
FIG. 3 is a flow diagram illustrating a content view edit method in accordance with one embodiment of the present invention.
FIGS. 4 to 9 show screenshots illustrating a content view edit method in accordance with one embodiment of the present invention.
FIGS. 10 and 11 show screenshots illustrating a content view edit method in accordance with another embodiment of the present invention.
FIGS. 12 and 13 show screenshots illustrating a content view edit method in accordance with still another embodiment of the present invention.
FIGS. 14 and 15 show screenshots illustrating a content view edit method in accordance with yet another embodiment of the present invention.

### DETAILED DESCRIPTION OF THE INVENTION

Exemplary, non-limiting embodiments of the present invention will now be described more fully with reference to the accompanying drawings. This invention may, however, be embodied in many different forms and should not be construed as limited to the exemplary embodiments set forth herein. Rather, the disclosed embodiments are provided so that this disclosure will be thorough and complete, and will fully convey the scope of the invention to those skilled in the art. The principles and features of this invention may be employed in varied and numerous embodiments without departing from the scope of the invention.

Furthermore, well known or widely used techniques, elements, structures, and processes may not be described or illustrated in detail to avoid obscuring the essence of the present invention. Although the drawings represent exemplary embodiments of the invention, the drawings are not necessarily to scale and certain features may be exaggerated or omitted in order to better illustrate and explain the present invention.

In this disclosure, a content view contains a plurality of panels, which may be arranged in the form of grid. Content may be located at each panel. Namely, a panel represents a unit region where content is located. Adjacent panels may be combined with each other, and content may be displayed at such combined panels. An edit screen of a content view may offer the outline of panels. After editing is finished, the outline may disappear. An edit screen of a content view may be displayed when a user touches any point of the content view for a predefined period so as to add or change content. Here, a panel (hereinafter, referred to as an edit target panel) selected by a touch point may be distinguished from the other panels. For example, the outline of an edit target panel may be highlighted for distinction. Also, a candidate group may be displayed near or around an edit target panel. For example, a candidate group may be located at left and right in a horizontal orientation or upper and lower panels of an edit target panel in a vertical orientation. From a candidate group displayed near or around the edit target panel, a user can select a desired content to be displayed in the edit target panel.

A content view edit method and apparatus of this invention may be applied to a mobile device, which includes a mobile phone, a smart phone, a tablet PC, a handheld PC, a portable multimedia player (PMP), a digital broadcasting player, a personal digital assistant (PDA), a music player (e.g., an MP3 player), a digital camera, a portable game console, and the like.

Briefly, a content view edit method and apparatus of this invention are characterized by selecting a region for locating content from a content view, providing a candidate group near or around the selected region, and displaying the content view in which content selected from the candidate group is placed or displayed at the selected region.

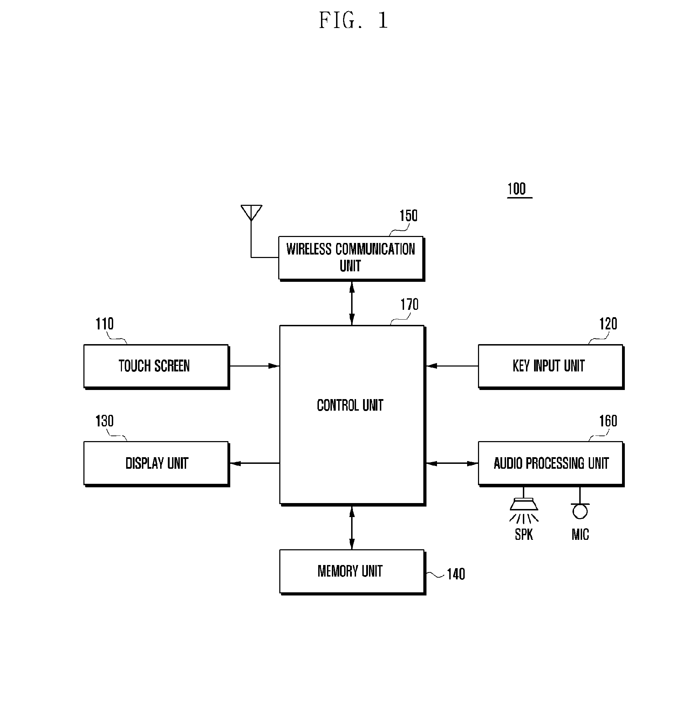

FIG. 1 is a block diagram illustrating the configuration of a mobile device in accordance with an embodiment of the present invention.

As shown, the mobile device 100 may include a touch screen 110, a key input unit 120, a display unit 130, a memory unit 140, a wireless communication unit 150, an audio processing unit 160, a microphone (MIC), a speaker (SPK), and a control unit 170.

The touch screen 110 is disposed on the front of the display unit 130. The touch screen 110 creates a touch event in response to user's touch gesture and sends the touch event to the control unit 170. Then, the control unit 170 recognizes the touch event received from the touch screen 110 and controls the above-mentioned elements in response to the touch event. Particularly, the control unit 170 may edit a content view in response to the touch event. The type of touch gestures may be classified into a touch, a tap, a long tap, a drag, a sweep, and the like. The touch refers to a touch gesture to make a touch input tool (e.g., a finger or stylus pen) be in contact with any point on a screen. The tap refers to a touch gesture to touch any point on a screen and then release (i.e., drop) a touch input tool from the touch point without moving the touch input tool. The long tap refers to a touch gesture to contact relatively longer than a general short tap, and also may release a touch input tool from the touch point without moving the touch input tool. The drag refers to a touch gesture to move a touch input tool in an arbitrary direction while maintaining a touch on a screen. The sweep, also referred to as a flick, refers to a touch gesture to move a touch input tool more quickly than a drag and then release the touch input tool. The touch screen 110 may use resistive type, capacitive type, electromagnetic induction type, pressure type, and the like.

The key input unit 120 includes a plurality of input keys and function keys to receive user's inputs and to set up various functions. The function keys may have navigation keys, side keys, shortcut keys, and any other special keys defined to perform particular functions. Additionally, the key input unit 120 creates key events associated with setting and function control of the mobile device 100, and then delivers them to the control unit 170. Such key events may include power on/off events, volume regulating events, screen on/off events, and the like. The control unit 170 may control the above-mentioned elements in response to these key events.

The display unit 130 converts, under the control of the control unit 170, digital data received from the control unit 170 into analog data and in turn displays them. Namely, the display unit 130 may display various screens associated with the use of the mobile device, such as a lock screen, a home screen, an application (shortened to 'app') executing screen, a background screen, a content view, and the like. The lock screen may be provided when the display unit 130 is activated. If a particular touch gesture for unlock is detected, the control unit 170 may control the display unit 130 to display the home screen or the app executing screen instead of the lock screen. The home screen may contain a plurality of app icons corresponding to various apps. When one of the app icons is selected by a user, the control unit 170 executes a corresponding app. Then, the display unit 130 displays a specific executing screen for executing the selected app. Also, under the control of the control unit 170, the display unit 130 may display one of the above screens as a main screen and further display one of the others as a sub screen overlapped with the main screen. For example, the display unit 130 may display the background screen and also display the content view thereon. Moreover, the display unit 130 may display an edit screen of a content view and further display a candidate group thereon. Meanwhile, the display unit 130 may be formed of any planar display panel such as LCD (liquid crystal display), OLED (organic light emitting diodes), AMOLED (active matrix OLED), or any other equivalent.

The memory unit 140 may store an operating system (OS) of the mobile device, various applications, and various data such as text, audio and video. The memory unit 140 may include a program region and a data region. The data region of the memory unit 140 may store data created in the mobile device 100 or downloaded from the outside during the operation of the mobile device. Additionally, the data region may store the above-mentioned screens to be displayed on the display unit 130 and various setting values required for the operation of the mobile device, and also temporarily store data copied for pasting. The program region of the memory unit 140 may store the OS for booting and operating the mobile device 100, and various applications. Particularly, the program region stores a specific application that edits a content view.

The wireless communication unit 150 performs a voice call, a video call, a data communication, or a digital broadcasting reception under the control of the control unit 170. To this end, the wireless communication unit 150 may include a mobile communication module (e.g., a 3rd generation mobile communication module, a 3.5th generation mobile communication module, a 4th generation mobile communication module, etc.), a short-distance communication module (e.g., a Wi-Fi module), and a digital broadcast module (e.g., a DMB module).

The audio processing unit 160 converts digital audio data received from the control unit 170 into analog audio data and then delivers them to the speaker (SPK). Also, the audio processing unit 160 converts analog audio data, such as voice, received from the microphone (MIC) into digital audio data and then delivers them to the control unit 170.

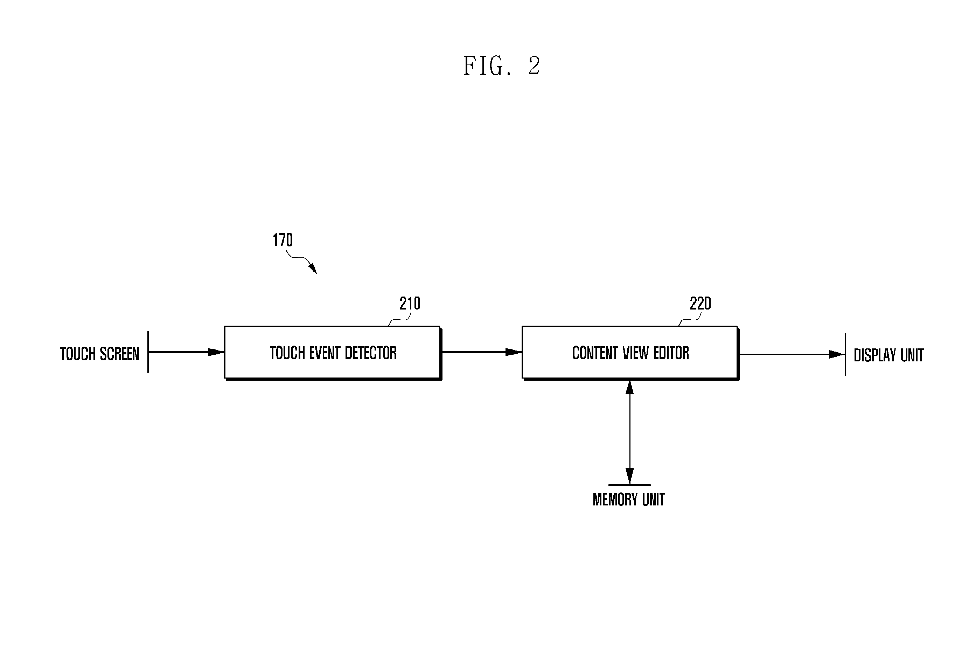

The control unit 170 controls the whole operations of the mobile device 100, controls signal flows between elements of the mobile device 100, and processes data. The control unit 170 controls power supply from a battery to the elements. Additionally, the control unit 170 executes various types of applications stored in the program region. Particularly, the control unit 170 performs a content view edit method according to the teachings of the present invention. To this end, the control unit 170 may include elements shown in FIG. 2.

FIG. 2 is a block diagram illustrating a detailed configuration of a control unit shown in FIG. 1. As shown 2, the control unit 170 may include a touch event detector 210 and a content view editor 220.

The touch event detector 210 is coupled to the touch screen 110. The touch event detector 210 detects a touch event from the touch screen 110 and delivers the detected touch event to the content view editor 220. Such a touch event includes a touch point, a touch moving direction, touch gesture information, and the like.

The content view editor 220 is coupled to the display unit 130 and to the memory unit 140. The content view editor 220 receives a content view from the memory unit 140. Also, the content view editor 220 controls the display unit 130 to display the received content view. Particularly, based on the touch event received from the touch event detector 210, the content view editor 220 edits a content view and stores it in the memory unit 140. Additionally, the content view editor 220 controls the display unit 130 to display the edited content view. More detailed description of the content view editor 220 is as follows.

While a content view is displayed, the content view editor 220 determines whether a detected touch event is a specific touch event for adding or changing content. For example, a long tap may be used as a touch event for adding or changing content. Alternatively, any other touch gesture, e.g., a two taps or a double tap, may be used for adding or changing content. Hereinafter, a long tap will be used for a purpose of illustrative purposes.

In operation, if a detected touch event is a long tap, the content view editor 220 controls the display unit 130 to display an edit screen of a content view. Specifically, the content view editor 220 controls to display the outlines of panels. At this time, an edit target panel is distinguished from the other panels. For example, the outline of an edit target panel may be highlighted by means of color, contrast, thickness, brightness, or the like. Also, an edit target panel may be marked, and the edit target panel may be clearly displayed, whereas the other panels may be dimly displayed.

Furthermore, the content view editor 220 may control to display a candidate group around an edit target panel. This candidate group may be located at left and right or upper and lower panels of an edit target panel. A candidate group refers to a set of contents capable of being located at an edit target panel. Such contents may be classified according to various categories, e.g., video, widget, application, image, phonebook, document, and the like. The content view editor 220 controls to display these categories. Categories may be located at left and right or upper and lower panels of an edit target panel. If one of such categories is selected by a user, the content view editor 220 controls to display a candidate group of the selected category. If one content is selected from the candidate group by a user, the content view editor 220 locates the selected content at an edit target panel. Thereafter, the content view editor 220 receives an edit closing event from the touch event detector 210 and then stores an edited content view in the memory unit 140. Also, the content view editor 220 controls to display the edited content view.

According to a digital convergence tendency today, the mobile device 100 may further include any other elements such as a GPS module or a camera module. Particularly, the mobile device 100 may further include a sensor unit that detects information associated with location, moving speed, moving direction, and rotation of the mobile device 100 and then delivers the detected information to the control unit 170. For this function, the sensor unit may include an acceleration sensor or the like. The sensor unit converts detected physical quantity into electrical signals, converts the electrical signals into data through AD (analog-to-digital) conversion, and then delivers them to the control unit 170. When the mobile device 100 rotates, the sensor unit delivers rotation data to the control unit 170. Then, the control unit 170 detects the rotation of the mobile device 100 and, in response to that, changes a display mode of the screen. Meanwhile, as will be understood by those skilled in the art, some of the above-mentioned elements in the mobile device 100 may be omitted or replaced with another.

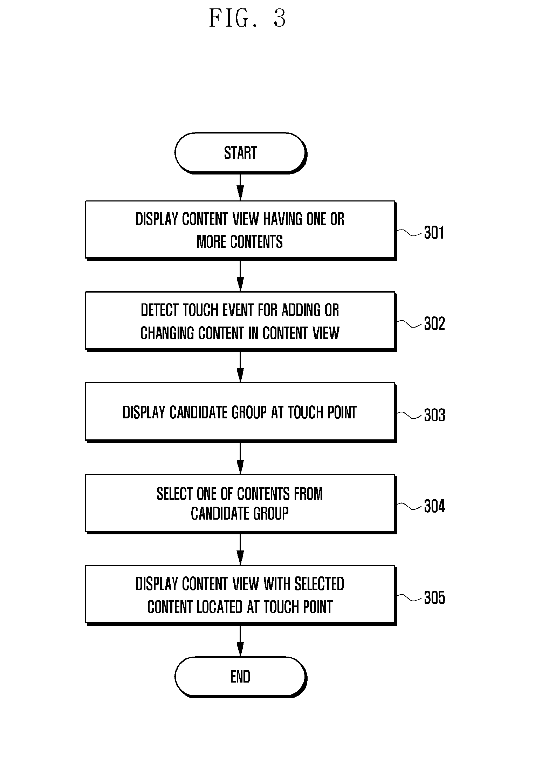

FIG. 3 is a flow diagram illustrating a content view edit method in accordance with one embodiment of the present invention.

Referring to FIG. 3, the control unit 170 controls the display unit 130 to display a content view that contains at least one content (step 301). When a user taps long any point on the content view being displayed, the touch screen 110 delivers a touch event to the control unit 170. In response, the control unit 170 detects the touch event (step 302) and determines whether the detected touch event is a specific touch event for adding or changing content. If the detected touch event is a long tap, the control unit 170 controls the display unit 130 to display panels and a candidate group (step 303). As discussed above, panels may be arranged in the form of grid. Here, a panel having a touch point of a long tap, i.e., an edit target panel, may be distinguished from the other panels. Also, the candidate group may be displayed around the edit target panel. For example, the candidate group may be located at left and right or upper and lower panels of the edit target panel. Next, the control unit 170 selects any content from the candidate group in response to a touch gesture (step 304). Then, the control unit 170 controls the display unit 130 to display the content view in which the selected content is located at a touch point, i.e., at the edit target panel (step 305).

Now, a content view edit method of this invention will be described in detail with reference to screenshots. In the specification, a display mode of a screen is classified into a landscape mode and a portrait mode. The landscape mode means that the width of screen is greater than the height. In contrast, the portrait mode means that the height of a screen is greater than the width. When a user rotates the mobile device 100, a sensor unit of the mobile device 100 detects a rotation and delivers detected information to the control unit 170. Then the control unit 170 determines a display mode of the mobile device 100, based on the detected information. A method and apparatus for a content view edit of this invention do not depend on a display mode. For illustrative purposes, the screen is in the landscape mode but should be noted that the teachings of the present invention is applicable to other modes.

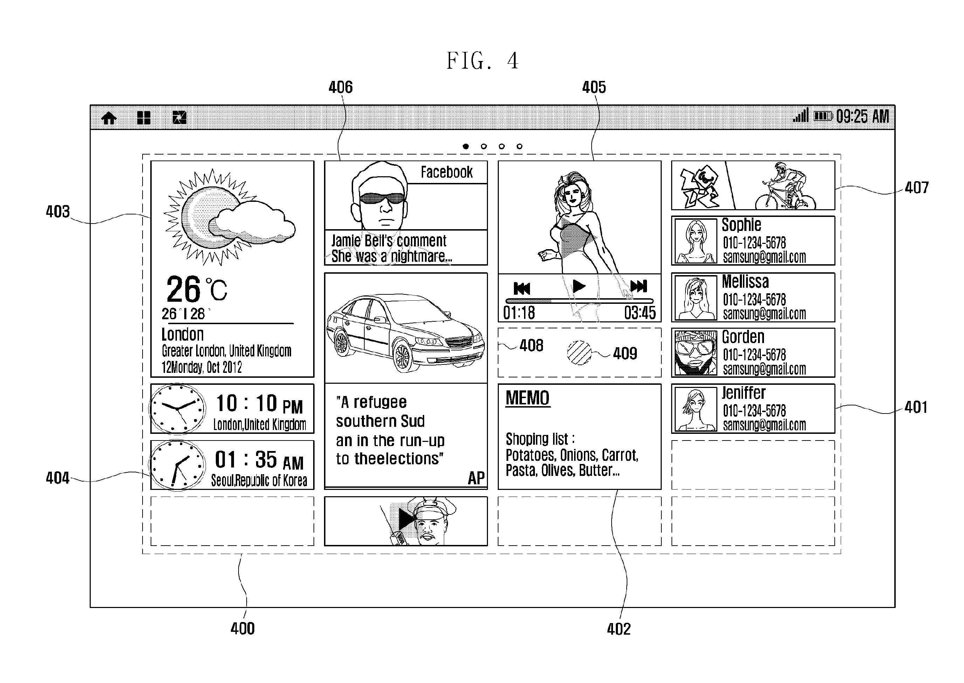

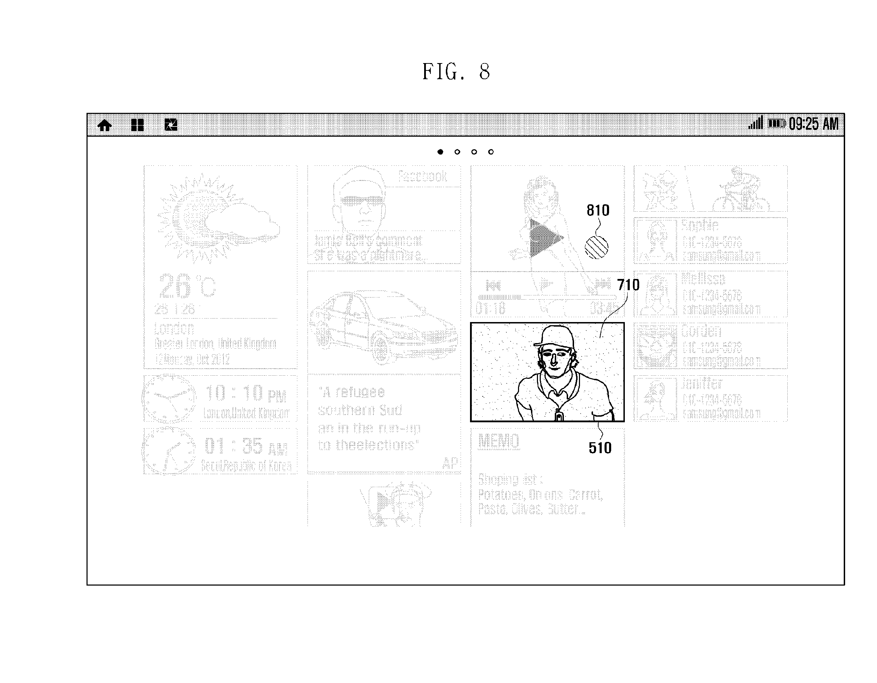

FIGs. 4 to 9 show screenshots illustrating a content view edit method in accordance with one embodiment of the present invention.

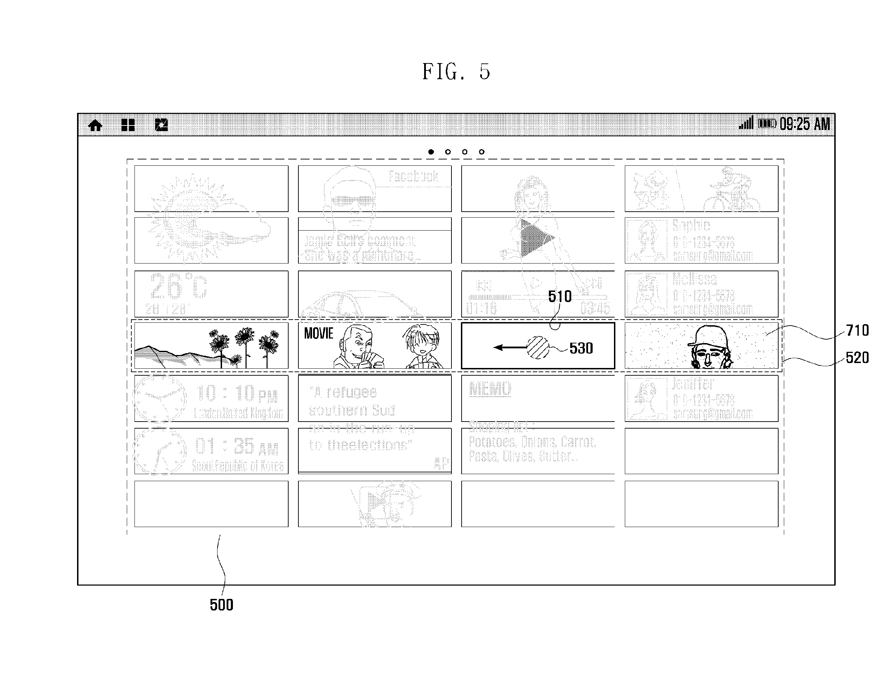

Referring to FIG. 4, the display unit 130 may display the content view 400 having a number of contents. As shown, different-sized contents may be arranged in the content view. For example, a reference number 401 indicates content assigned to one panel, a reference number 402 indicates content assigned to two panels, and a reference number 403 indicates content assigned to four panels. The content view 400 contains various types of contents. For example, the content view 400 may contain contact information 401, a memo 402, a weather widget 403, a clock 404, a video player 405, a social network service (SNS) 406, an image 407, and the like. In the content view 400, a user can tap long any content or any empty space (panel). Here, a long tap is assigned as a touch gesture for requesting a content view edit, especially, for addition or change of content. Namely, a long tap on content is a request for changing the tapped content to other content, and a long tap on an empty panel is a request for adding any content to the tapped panel. For example, if a user inputs a long tap 409 on an empty panel 408, the control unit 170 may control the display unit 130 to display an edit screen as shown in FIG. 5.

Referring to FIG. 5, the display unit 130 displays the first edit screen 500 of the content view. The first edit screen 500 contains a number of panels. These panels may be overlapped with the content view. Namely, as shown, the content view may be dimly displayed as a background of the panels. Also, the panels may be arranged in the form of grid. Meanwhile, an edit target panel 510 in which the long tap 409 is received is distinguished from the other panels. For example, the outline of the edit target panel 510 may be highlighted.

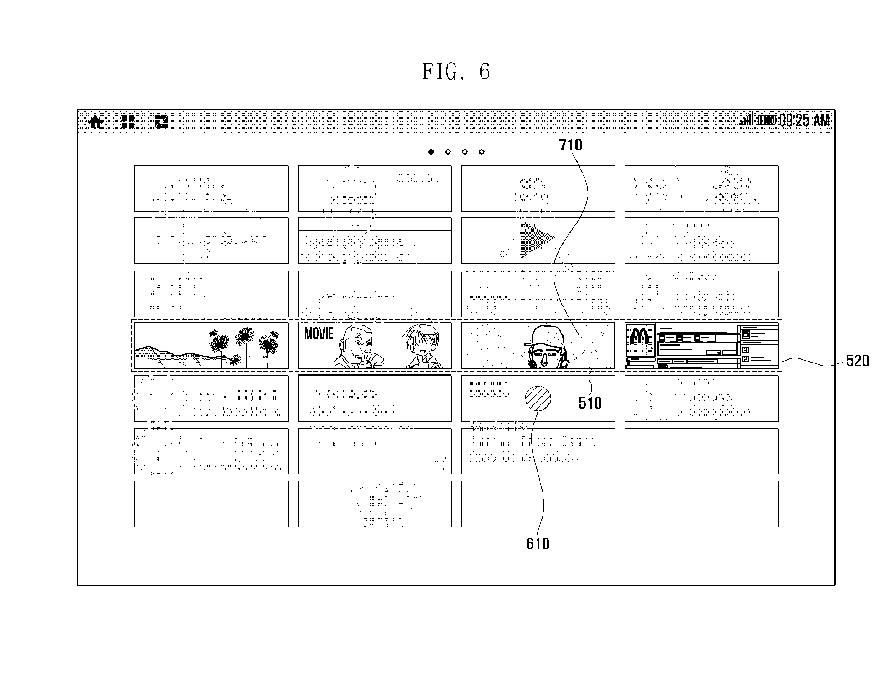

Moreover, the first edit screen 500 has a candidate group 520 that can be located at the edit target panel 510. As shown, the candidate group 520 may be located at left and right panels of the edit target panel 510. Alternatively, located at upper and lower panels is possible as the candidate group 520. If a user flicks 530 the candidate group 520 in a leftward direction, the control unit 170 moves contents of the candidate group 520 in a leftward direction. Accordingly, the location of content 710 is changed to the edit target panel 510 as shown in FIG. 6.

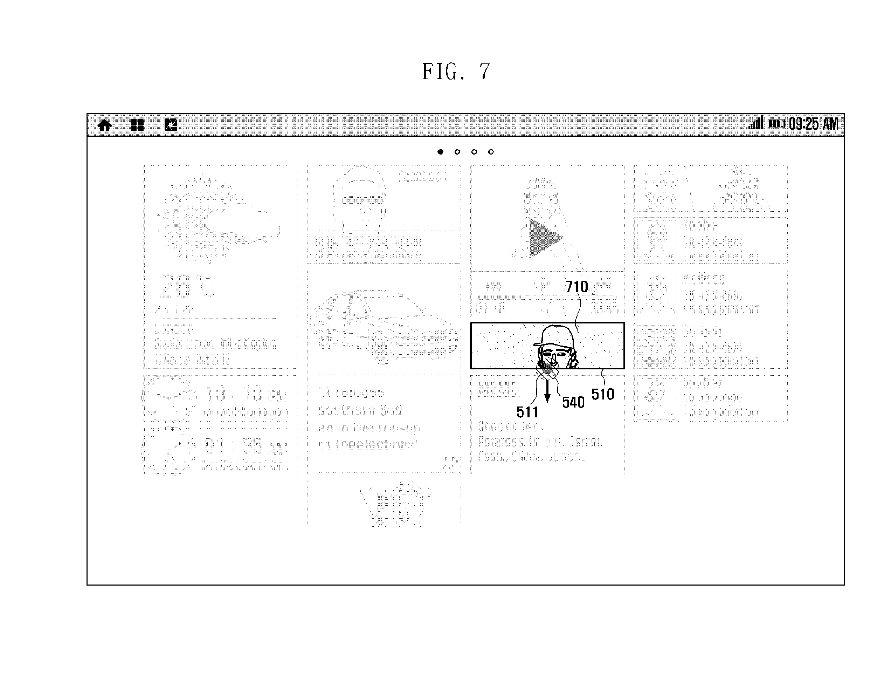

Referring to FIGs. 6 and 7, if a user touches any point at the outside of the candidate group 520, for example at 610, when content is located at the edit target panel 510, the control unit 170 removes a display of other panels except the edit target panel 510. However, the control unit 170 may maintain a dim display of the content view. Thereafter, a user may adjust the size of content 710 located at the edit target panel 510. Here, the control unit 170 may control the display unit 130 to display a handler 511 for size adjustment at the outline of the edit target panel 510.

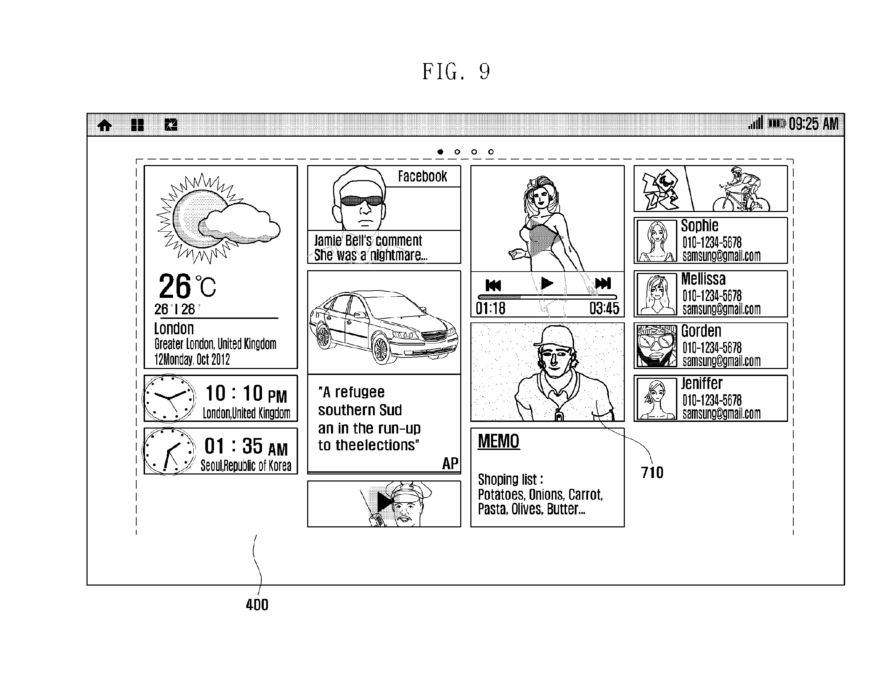

Referring to FIGs. 7 to 9, the display unit 130 displays the size adjustment handler 511 at the outline of the edit target panel 510. When a user drags 540 downward the handler 511, the control unit 170 enlarges both the edit target panel 510 and the content 710 located therein accordingly. After the adjustment of size, a user may finish an editing work. Finishing an editing work is also possible without size adjustment. Namely, when a user touches any point 810 outside the edit target panel 510, the control unit 170 finishes an editing process and then controls the display unit 130 to display the edited content view 400 as shown in FIG. 9.

Accordingly, as describe with reference to FIGs. 4 to 9, the content 710 is added at a touch point of long tap 409 in the edited content view 400.

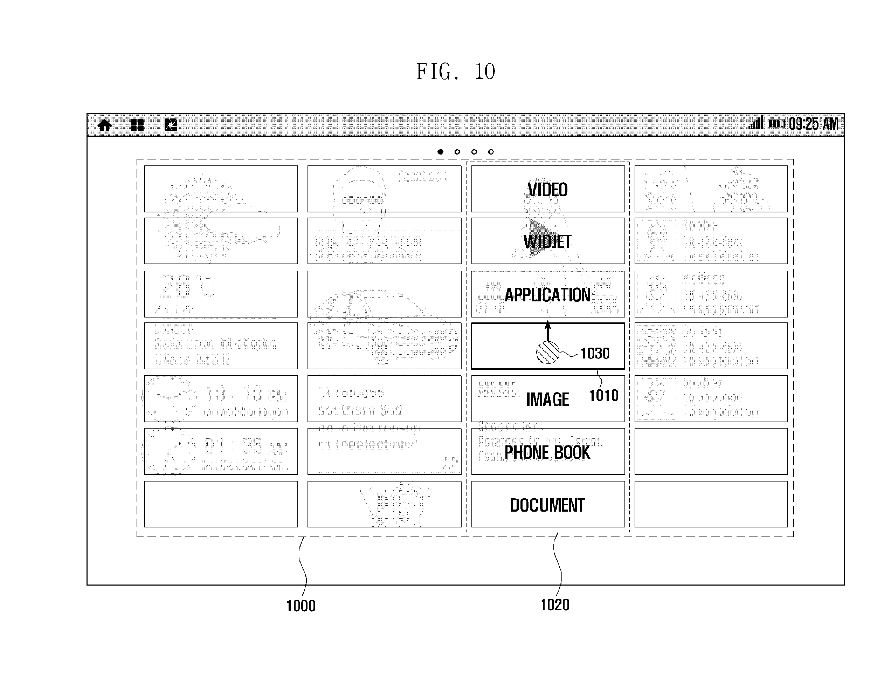

FIGs. 10 to 11 show screenshots illustrating a content view edit method in accordance with another embodiment of the present invention. Referring back to FIG. 4, a user can input a long tap 409 on the empty panel 408, then the control unit 170 controls the display unit 130 to display an edit screen as shown in FIG. 10.

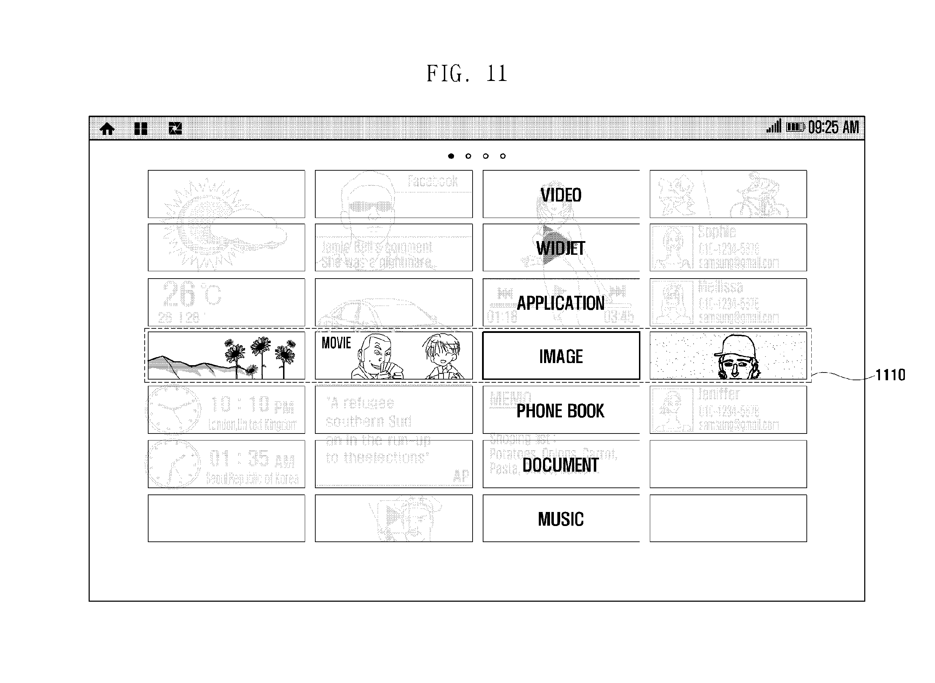

Referring to FIG. 10, the display unit 130 displays the second edit screen 1000 of the content view which contains a number of panels arranged in the form of grid. Among these panels, an edit target panel 1010 in which a long tap 409 is received is distinguished from the other panels. Here, the second edit screen 1000 has a category list 1020 of a candidate group. As shown, the category list 1020 may be located at upper and lower panels of the edit target panel 1010. For example, categories of the category list may be video, widget, application, image, phonebook, document, and the like. If a user flicks 1030 upward the category list 1020, the control unit 170 moves categories in an upward direction such that any category, e.g., 'image', can be located at the edit target panel 1010, as shown in FIG. 11. Then, the control unit 170 may control to display a candidate group 1110 of an image category at left and right panels of the edit target panel 1010.

Accordingly, a user can select a desired category by flicking downward or upward the category list 1020, and then select desired content of the selected category by flicking leftward or rightward the candidate group of the selected category. Here, a touch event for manipulating the category list and the candidate group may include, but not limited to, a flick or a drag. Meanwhile, in an alternative embodiment, the category list may be located at left and right of the edit target panel 1010, and thus the candidate group may be located at upper and lower.

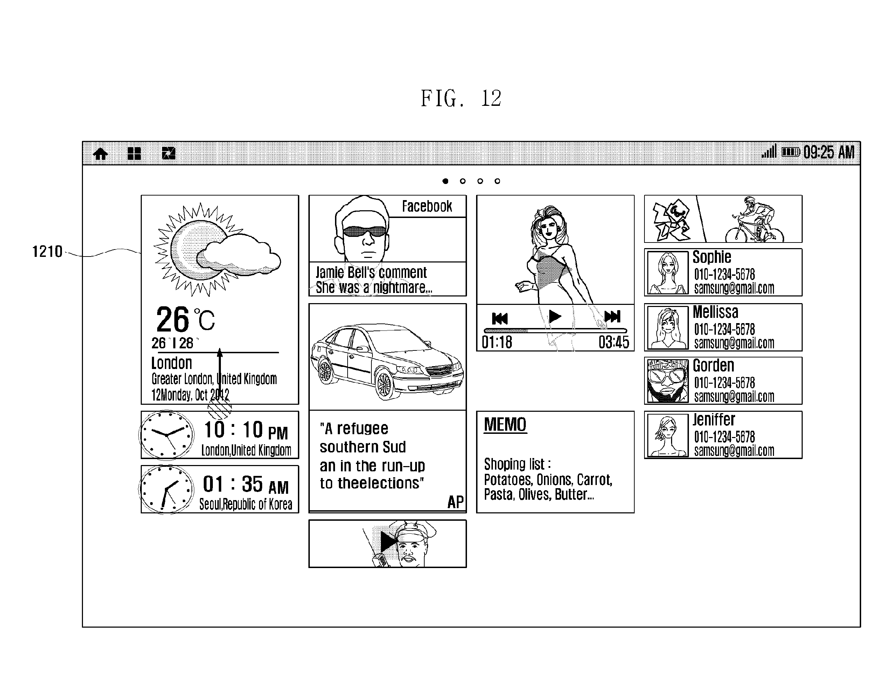

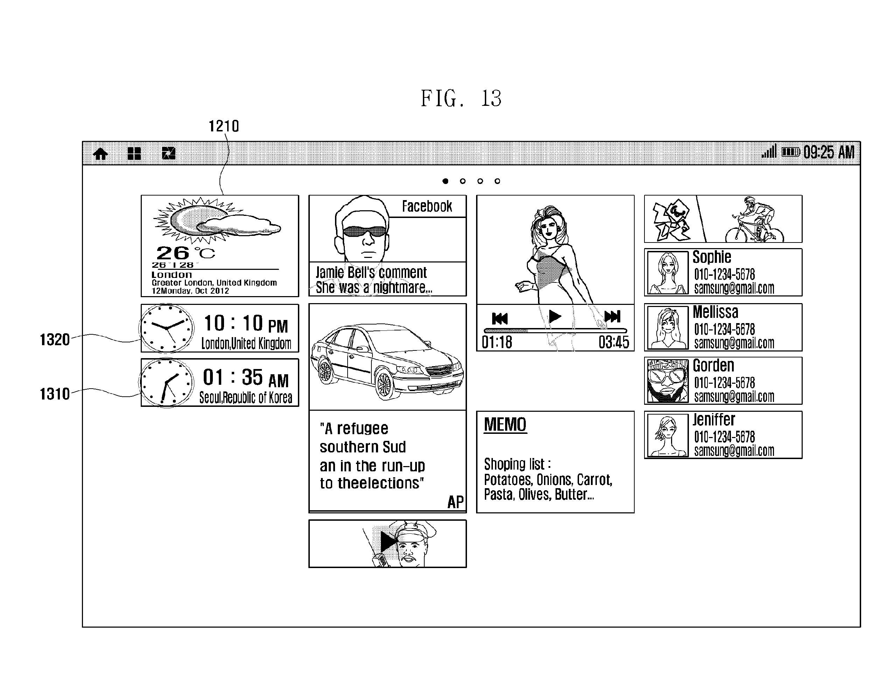

FIGS. 12 and 13 show screenshots illustrating a content view edit method in accordance with still another embodiment of the present invention.

Referring to FIG. 12, the display unit 130 displays a content view. In this state, a user may adjust the size of content. For example, when a user touches the bottom of a weather widget 1210 and then drags it upward, the touch screen 110 creates a specific touch event in response to this touch gesture. In response, the control unit 170 detects the touch event and, based on the touch event, reduces upward the size of the weather widget 1210 accordingly.

Referring to FIG. 13, the display unit 130 displays the size-reduced weather widget 1210 under the control of the control unit 170. Thereafter, a user may tap long the weather widget 1210 so as to display an edit screen, and then replace the weather widget 1210 with other content by manipulating a category list and a candidate group as discussed above. Alternatively, when reducing the weather widget 1210, the control unit 170 may move upward clock widgets 1310 and 1320 located below the weather widget or maintain their original positions.

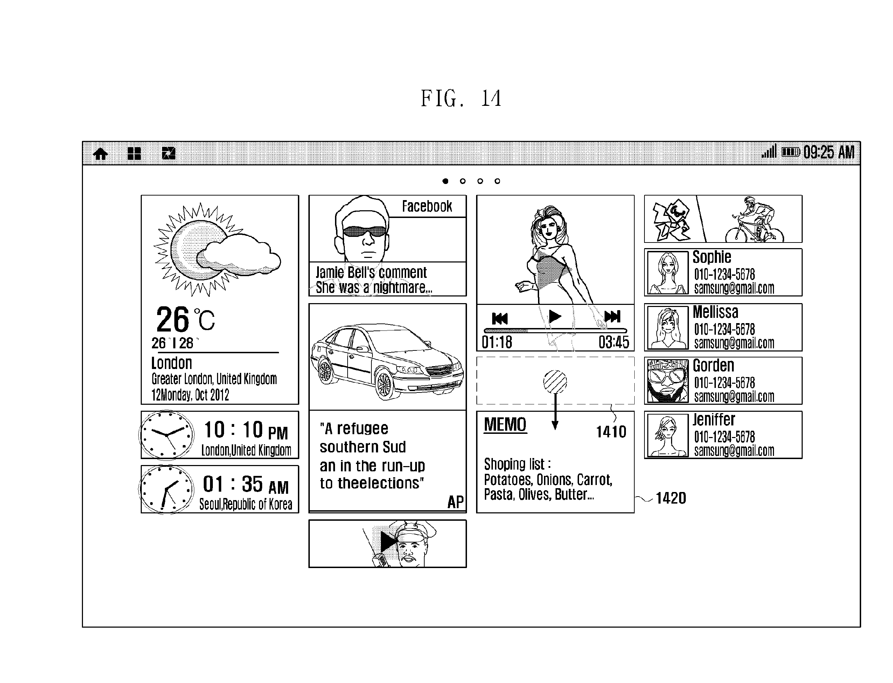

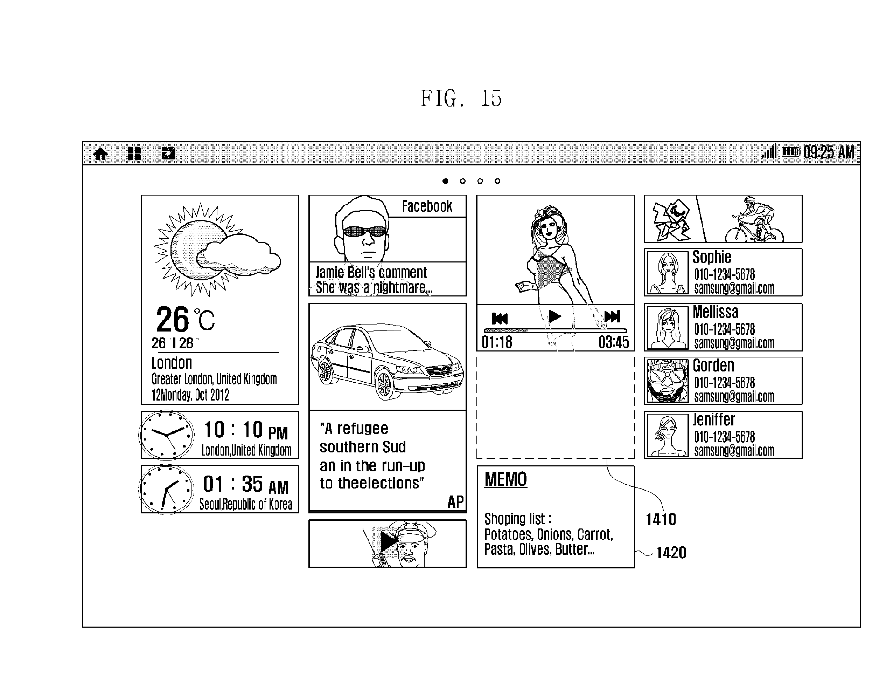

FIGS. 14 and 15 show screenshots illustrating a content view edit method in accordance with yet another embodiment of the present invention.

Referring to FIGS. 14 and 15, the display unit 130 displays a content view during which a user may adjust the size of an empty region. For example, when a user touches an empty region 1410 and then drags it downward, the control unit 170 detects the touch event and, based on the touch event, moves downward a memo 1420 so as to enlarge the size of the empty region 1410. Thereafter, a user may tap long the enlarged empty region 1410 so as to display an edit screen, then locate desired content at the empty region 1410 by manipulating a category list and a candidate group as discussed above.

The present invention is described herein with reference to flowchart illustrations of user interfaces, methods, and computer program products according to embodiments of the invention. It will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus to produce a machine, such that the instructions, which are executed via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that are executed on the computer or other programmable apparatus provide steps for implementing the functions specified in the flowchart block or blocks.

And each block of the flowchart illustrations may represent a module, segment, or portion of code, which comprises one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

While this invention has been particularly shown and described with reference to an exemplary embodiment thereof, it will be understood by those skilled in the art that various changes in form and details may be made therein without departing from the spirit and scope of the invention as defined by the appended claims.

## Claims

1. A method for editing a content view in a mobile device having a touch screen, the method comprising steps of:
detecting a touch event for adding or changing content in the content view;
displaying a candidate group having contents capable of being located at a touch point of the detected touch event;
displaying, at the touch point of the detected touch event, content selected from the contents of the candidate group; and
displaying the content view in which the selected content is located at the touch point.

2. The method of claim 1, wherein the displaying step of the candidate group includes:
displaying a plurality of panels in the content view;
highlighting an edit target panel among the plurality of panels, the edit target panel corresponding to the touch point; and
displaying the candidate group around the edit target panel.

3. The method of claim 2, wherein the candidate group includes the edit target panel and defined in a horizontal orientation or a vertical orientation.

4. The method of claim 2, wherein the plurality of panels are arranged in the form of grid.

5. The method of claim 2, wherein the candidate group encloses at least one left and right panels of the edit target panel.

6. The method of claim 1, wherein the selecting step of the content includes moving the contents of the candidate group so as to place one of the contents at an edit target panel, the edit target panel corresponding to the touch point.

7. The method of claim 6, wherein the touch event for moving the contents of the candidate group includes a flick or a drag.

8. The method of claim 1, further comprising step of:
locating and displaying a category list of the candidate group at upper and lower or left and right panels of an edit target panel, the edit target panel corresponding to the touch point.

9. The method of claim 8, wherein the displaying step of the candidate group includes, when one of categories is selected from the category list, defining the candidate group corresponding to the selected category at upper and lower or left and right panels of the edit target panel.

10. The method of claim 1, wherein the touch event for adding or changing the content includes a long tap.

11. An apparatus for editing a content view in a mobile device, comprising:
a display unit configured to display the content view;
a touch screen configured to detect a touch event in response to a touch gesture on the content view;
a control unit configured to detect a specific touch event for adding or changing content in the content view, to control the display unit to display a candidate group having contents capable of being located at a touch point of the detected touch event, to control the display unit to display, at the touch point of the detected touch event, content selected from the contents of the candidate group, and to control the display unit to display the content view in which the selected content is located at the touch point.

12. The apparatus of claim 11, wherein the control unit is further configured to control displaying a plurality of panels in the content view in response to the detected touch event, to highlight an edit target panel among the plurality of panels, the edit target panel corresponding to the touch point, and to control displaying the candidate group around the edit target panel.

13. The apparatus of claim 11, wherein the control unit is further configured to place one of the contents at an edit target panel by moving the contents of the candidate group, the edit target panel corresponding to the touch point.

14. The apparatus of claim 11, wherein the control unit is further configured to locate a category list of the candidate group at upper and lower or left and right panels of an edit target panel, the edit target panel corresponding to the touch point.

15. The apparatus of claim 11, wherein the touch event for adding or changing the content includes a long tap.
